# EUROPEAN PATENT SPECIFICATION

(11) **EP 2 754 972 B1**
(45) Date of publication and mention of the grant of the patent: **19.08.2015**
(21) Application number: 13198161.5
(22) Date of filing: 18.12.2013
(51) Int. Cl.: F24F 12/00, F24F 13/10

(54) **Ventilation device for buildings equipped with a valve for opening and closing an aperture for the passage of an airflow**
Belüftungsvorrichtung für Gebäude mit einem Ventil zum Öffnen und Verschließen einer Öffnung für den Durchgang einer Luftströmung
Dispositif de ventilation pour bâtiments équipés d'une soupape d'ouverture et de fermeture d'une ouverture pour le passage d'un flux d'air

(30) Priority: 09.01.2013 IT TO20130009
(43) Date of publication of application: 16.07.2014
(73) Proprietor: Thesan S.p.A., 10129 Torino (IT)
(72) Inventor: Balbo di Vinadio, Aimone, I-10050 Chiusa San Michele (Torino) (IT)
(74) Representative: Marchitelli, Mauro

(56) References cited:
- EP-A2- 0 114 241
- EP-A2- 2 407 727
- US-A- 1 407 216

## Description

### Field of the invention

The present invention relates to a ventilation device equipped with a valve for opening and closing an aperture for the passage of an airflow.

### Description of the prior art

Ventilation devices for buildings are normally equipped with a first fan unit that generates a first airflow directed from the inside outwards and a second fan unit that generates a second airflow directed from the outside inwards. The two airflows are usually arranged in a relationship of mutual heat exchange within a heat exchanger, for the recovery of the thermal energy of the airflow directed outwards.

Air exchange devices of this type (see for example patent document EP-2407727-A) can be equipped with valve devices to close one or both of the apertures communicating with the outside of the building. The valve devices may envisage the use of movable partitions for the opening and closing of the apertures in communication with the external environment

The solutions that envisage a movable partition for opening and closing the apertures have a large footprint due to the need to provide a free space equal to the opening stroke of and closing the movable partitions.

### Object and summary of the invention

The present invention aims to provide a ventilation device with a valve for opening and closing an aperture for the passage of an airflow, having a smaller footprint.

According to the present invention, this object is achieved by a device having the features forming the subject of claim 1.

The claims form an integral part of the disclosure provided in relation to the invention.

### Brief description of the drawings

The present invention will now be described in detail with reference to the attached drawings, given purely by way of non-limiting example, wherein:
- Figure 1 is an exploded perspective view of a ventilation device according to the present invention,
- Figure 2 is a perspective view of a valve device indicated by the arrow II in Figure 1
- Figures 3 and 4 are perspective views illustrating the valve device of Figure 2 in a partially closed and fully closed condition, respectively,
- Figure 5 is a cross-section of the valve element indicated by the arrow V in Figure 2, and
- Figure 6 is an exploded cross-section of the valve element of Figure 5.

### Description of embodiments

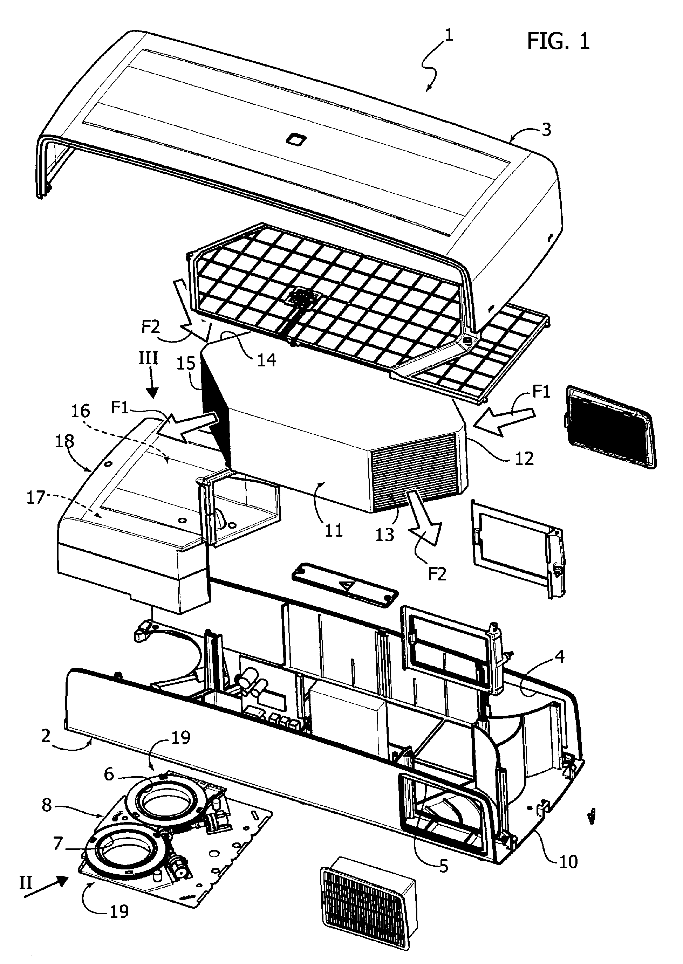

With reference to Figure 1, numeral 1 indicates an air exchange device for buildings according to the present invention. The device 1 comprises a casing including a base 2 and a lid 3, which can be made of rigid injection-molded plastic material.

The device 1 is intended to be mounted in an internal environment of a building in order to carry out air exchange with recovery of the airflow energy delivered to the outside. The device 1 is intended to be fixed on a perimetrical wall and communicates with the external environment by means of a pair of holes formed in the perimetrical wall.

The base 2 comprises an internal inlet opening 4, an internal outlet opening 5, an external inlet opening 6 and an external outlet opening 7. The external inlet opening 6 and the external outlet opening 7 communicate with the holes formed in the perimetrical wall.

The external inlet opening 6 and the external outlet opening 7 are associated with a valve device 8 configured to hermetically close the openings 6, 7.

The base 2 contains a heat exchanger 11 having a first inlet 12 in communication with the internal inlet opening 4, a first outlet 13 in communication with the internal outlet opening 5, a second inlet 14 in communication with the external inlet opening 6 and a second outlet 15 in communication with the external outlet opening 7.

The air exchange device 1 comprises a first fan unit 16 that generates a first airflow F1 directed from the internal inlet opening 4 towards the external outlet opening 7 and a second fan unit 17 that generates a second airflow F2 directed from the external inlet opening 6 towards the internal outlet opening 5. The first and second airflows F1, F2 are in a relationship of mutual heat exchange in the heat exchanger 11. In winter when the temperature of the internal environment is greater than the temperature of the external environment, the outwardly directed airflow F1 transfers heat to the inwardly directed airflow F2. In summer when the internal environment is conditioned and is at a lower temperature than the external temperature the outwardly directed airflow F1 cools the inwardly directed airflow F2.

In the illustrated example, the first and the second fan units 16, 17 are housed in an elastic support 18 in the form of cushion, equipped with seats for housing the fan units 16, 17 and ducts for the passage of the airflows F1 and F2.

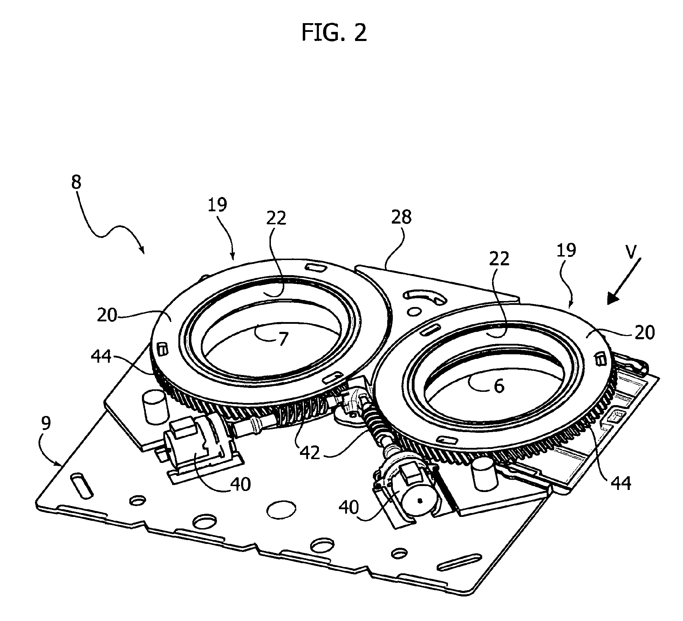

With reference to Figures 2 to 6, the valve device 10 comprises a plate 9, for example of sheet metal, fixed to a bottom wall 10 of the base 2 (Figure 1).

The plate 9 has two openings 6, 7 for the passage of the airflows F1 and F2. A respective valve element 19 is associated with each opening 6, 7.

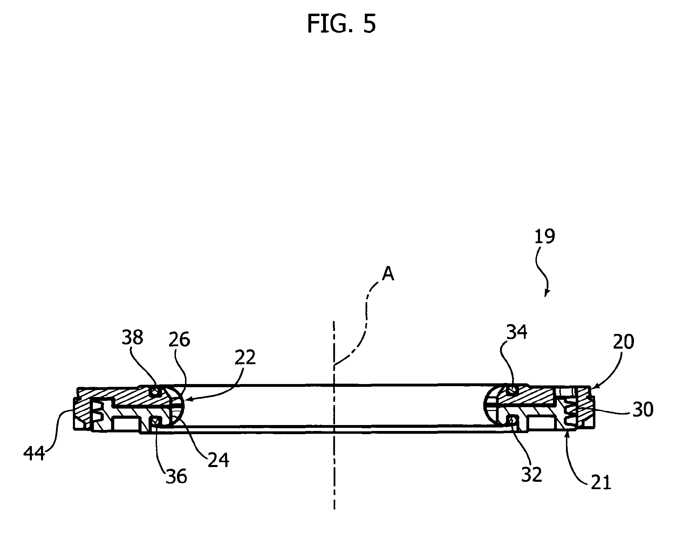

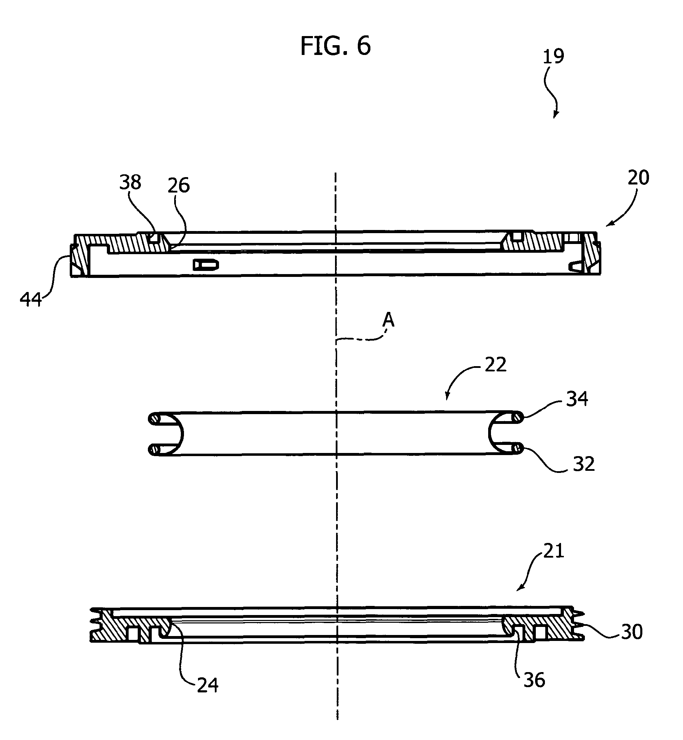

With reference to Figures 5 and 6, each valve element 19 comprises a fixed crown gear 21, a rotatable crown gear 20 and a flexible sleeve 22. The fixed crown gear 21 and the rotatable crown gear 20 have respective openings 24, 26 aligned with each other and arranged alongside the respective openings 6, 7 of the plate 9. In the illustrated example the fixed crown gear 21 is fastened to a support 28 (Figures 2-4) in turn fastened to the plate 9. Preferably, the fixed crown gear 21 and the rotatable crown gear 20 are connected together by means of a threaded coupling 30, in such a way so that following the rotation of the rotatable crown gear 20 about the axis A, a relative axial displacement between the gears 21, 20 is also obtained.

The flexible sleeve 22 is constituted of a thin tubular-shaped film of flexible and elastic material, such as latex or the like. The sleeve 22 has two opposite ends, which are attached, respectively, to the fixed crown gear 21 and the rotatable crown gear 20. Preferably, the opposite ends of the flexible sleeve 22 are fixed to two o-rings 32, 34 that are inserted within the respective grooves 36, 38 formed in the fixed crown gear 21 and the rotatable crown gear 20.

With reference to Figures 1 to 3, each valve device 19 comprises an actuator 40 for controlling the rotation of the respective rotatable crown gear 20 about the axis A. In the example illustrated in the figures, the actuator 40 is an electric motor, which rotationally drives a worm screw 42 that engages with a helical gear 44 of the rotatable crown gear 20. However, other mechanisms for controlling the rotation of the rotatable crown gear 20 may be used. Position sensors associated with the rotatable crown gear 20 may also be provided and configured to stop the actuator 40 when the rotatable crown gear 20 reaches the open position and the closed position.

In the open position, illustrated in Figures 2 and 5, the flexible sleeve 22 has an annular shape and is adjacent to the edges of the openings 24, 26. In this condition the opening 6, 7 is open and allows the transit of an airflow.

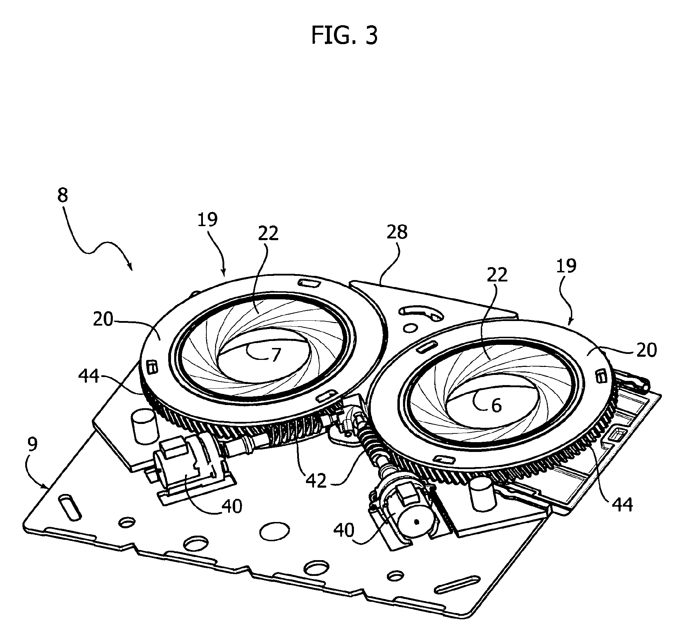

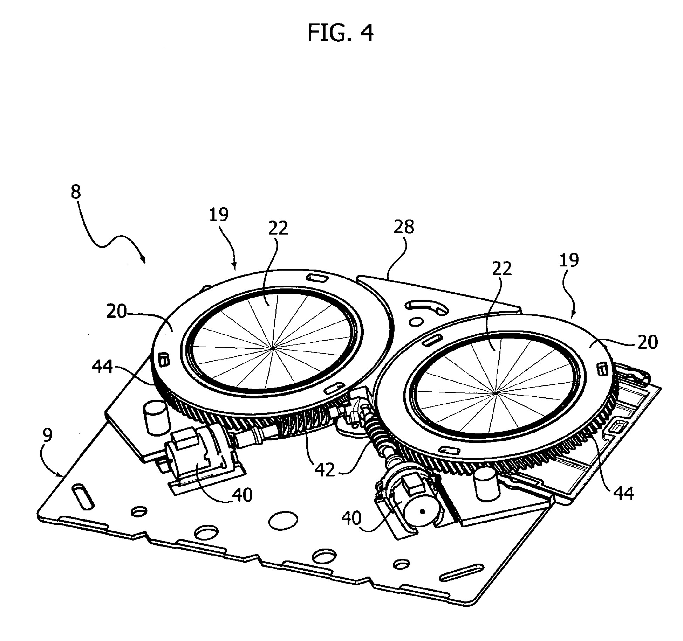

To close the opening 6, 7, the rotatable crown gear 20 is rotationally driven about the axis A by means of the actuator 40. During the rotation of the rotatable crown gear 20, the two opposite ends of the flexible sleeve 22 rotate relative to one another. The flexible sleeve 22 consequently assumes a diaphragm shape as shown in Figures 3 and 4. Figure 3 illustrates a partially closed position and Figure 4 illustrates the fully closed position of the valve device 19.

The worm screw and helical gear transmission system is unidirectional so that the rotatable crown gear 20 is retained in a stable manner in the position that is reached. This also partially closed stable positions of the valve device 19.

The valve device 19 according to the present invention can be used in air exchange devices for buildings and in any other application where there is the need to completely or partially close a duct for the passage of an airflow.

Of course, without prejudice to the principle of the invention, the details of construction and the embodiments may vary widely with respect to those described and illustrated without departing from the scope of the invention as defined by the claims that follow.

## Claims

1. Air exchange device for buildings, comprising:
- a casing (2, 3) having an internal inlet opening (4), an internal outlet opening (5), an external inlet opening (6) and an external outlet opening (7),
- a heat exchanger (11) housed inside said casing (2, 3) and having a first inlet (12) in communication with the internal inlet opening (4), a first outlet (15) in communication with the external outlet opening (7), a second inlet (14) in communication with the external inlet opening (6) and a second outlet (13) in communication with the internal outlet opening (5),
- a first fan unit (16) arranged for generating a first airflow (F1) directed from the internal inlet opening (4) towards the external outlet opening (7) and a second fan unit (17) arranged for generating a second airflow (F2) directed from the external inlet opening (6) towards the internal outlet opening (5), wherein the first and second airflows (F1, F2) are in a relationship of mutual heat exchange in said heat exchanger (11), and
- a valve device (8) including respective valve elements (19) for opening and closing the external inlet opening (6) and the external outlet opening (7), **characterized in that** each of said valve elements (19) comprises:
- a fixed crown gear (21),
- a rotatable crown gear (20),
- a flexible sleeve (22) having a first end (32) fastened to the fixed crown gear (21) and a second end (34) fastened to the rotatable crown gear (20), and
- an actuator (40) for controlling the rotation of the rotatable crown gear (20) with respect to the fixed crown gear (21) between an open position wherein the flexible sleeve (22) has essentially an annular shape and a closed position wherein the flexible sleeve (22) has essentially a diaphragm shape.

2. Device according to claim 1, **characterized in that** the fixed crown gear (21) and the rotatable crown gear (20) are interconnected by means of a threaded coupling (30).

3. Device according to claim 1, **characterized in that** the ends of said flexible sleeve (22) are anchored to the respective o-rings (32, 34) that are inserted within respective grooves (36, 38) of the fixed crown gear (21) and the rotatable crown gear (20).

## Patentansprüche

1. Luftaustauschvorrichtung für Gebäude, umfassend:
- ein Gehäuse (2, 3) mit einer inneren Einlassöffnung (4), einer inneren Auslassöffnung (5), einer äußeren Einlassöffnung (6) und einer äußeren Auslassöffnung (7),
- einen innerhalb des Gehäuses (2, 3) untergebrachten Wärmetauscher (11) mit einem ersten Einlass (12), der mit der inneren Einlassöffnung (4) in Verbindung steht, einem ersten Auslass (15), der mit der äußeren Auslassöffnung (7) in Verbindung steht, einem zweiten Einlass (14), der mit der äußeren Einlassöffnung (6) in Verbindung steht, und einem zweiten Auslass (13), der mit der inneren Auslassöffnung (5) in Verbindung steht,
- eine erste Lüftereinheit (16), die angeordnet ist, einen ersten Luftstrom (F1) zu erzeugen, der von der inneren Einlassöffnung (4) zur äußeren Auslassöffnung (7) führt, und eine zweite Lüftereinheit (17), die angeordnet ist, einen zweiten Luftstrom (F2) zu erzeugen, der von der äußeren Einlassöffnung (6) zur inneren Auslassöffnung (5) führt, wobei der erste und der zweite Luftstrom (F1, F2) in einem Verhältnis des wechselseitigen Wärmeaustauschs im Wärmetauscher (11) stehen, und
- eine Ventilvorrichtung (8), die entsprechende Ventilelemente (19) zum Öffnen und Schließen der äußeren Einlassöffnung (6) und der äußeren Auslassöffnung (7) beinhaltet,
**dadurch gekennzeichnet, dass** jedes der Ventilelemente (19) Folgendes umfasst:
- ein feststehendes Kronenrad (21),
- ein drehbares Kronenrad (20),
- eine flexible Hülse (22) mit einem ersten Ende (32), das am feststehenden Kronenrad (21) befestigt ist, und einem zweiten Ende (34), das am drehbaren Kronenrad (20) befestigt ist, und
- ein Stellglied (40) zum Steuern der Umdrehung des drehbaren Kronenrads (20) bezüglich des feststehenden Kronenrads (21) zwischen einer offenen Position, bei der die flexible Hülse (22) im Wesentlichen eine Ringform aufweist, und einer geschlossenen Position, bei der die flexible Hülse (22) im Wesentlichen eine Membranform aufweist.

2. Vorrichtung nach Anspruch 1, **dadurch gekennzeichnet, dass** das feststehende Kronenrad (21) und das drehbare Kronenrad (20) durch eine Gewindekupplung (30) miteinander verbunden sind.

3. Vorrichtung nach Anspruch 1, **dadurch gekennzeichnet, dass** die Enden der flexiblen Hülse (22) in den jeweiligen O-Ringen (32, 34) verankert sind, die in jeweilige Nuten (36, 38) des feststehenden Kronenrads (21) und des drehbaren Kronenrads (20) eingesetzt sind.

## Revendications

1. Dispositif d'échange d'air pour bâtiments, comprenant :
- une enveloppe (2, 3) ayant une ouverture d'entrée interne (4), une ouverture de sortie interne (5), une ouverture d'entrée externe (6) et une ouverture de sortie externe (7),
- un échangeur de chaleur (11) logé à l'intérieur de ladite enveloppe (2, 3) et ayant une première entrée (12) en communication avec l'ouverture d'entrée interne (4), une première sortie (15) en communication avec l'ouverture de sortie externe (7), une seconde entrée (14) en communication avec l'ouverture d'entrée externe (6) et une seconde sortie (13) en communication avec l'ouverture de sortie interne (5),
- une première unité de ventilateur (16) agencée pour générer un premier flux d'air (F1) dirigé à partir de l'ouverture d'entrée interne (4) vers l'ouverture de sortie externe (7) et une seconde unité de ventilateur (17) agencée pour générer un second flux d'air (F2) dirigé à partir de l'ouverture d'entrée interne (6) vers l'ouverture de sortie interne (5), dans lequel les premier et second flux d'air (F1, F2) sont dans une relation d'échange de chaleur mutuel dans ledit échangeur de chaleur (11), et
- un dispositif de valve (8) comprenant des éléments de valve respectifs (19) pour ouvrir et fermer l'ouverture d'entrée externe (6) et l'ouverture de sortie externe (7),
**caractérisé en ce que** chacun desdits éléments de valve (19) comprend :
- une roue plate fixe (21),
- une roue plate rotative (20),
- un manchon flexible (22) ayant une première extrémité (32) fixée à la roue plate fixe (21) et une seconde extrémité (34) fixée à la roue plate rotative (20), et
- un actionneur (40) pour commander la rotation de la roue plate rotative (20) par rapport à la roue plate fixe (21) entre une position ouverte dans laquelle le manchon flexible (22) a essentiellement une forme annulaire et une position fermée dans lequel le manchon flexible (22) a essentiellement une forme de diaphragme.

2. Dispositif selon la revendication 1, **caractérisé en ce que** la roue plate fixe (21) et la roue plate rotative (20) sont interconnectées au moyen d'un couplage fileté (30).

3. Dispositif selon la revendication 1, **caractérisé en ce que** les extrémités dudit manchon flexible (22) sont ancrées dans les joints toriques (32, 34) respectifs qui sont insérés à l'intérieur des rainures (36, 38) respectives de la roue plate fixe (21) et de la roue plate rotative (20).
